# EUROPÄISCHE PATENTSCHRIFT

(11) **EP 2 214 989 B1**
(45) Veröffentlichungstag und Bekanntmachung des Hinweises auf die Patenterteilung: **03.08.2011**
(21) Anmeldenummer: 08843731.4
(22) Anmeldetag: 29.10.2008
(51) Int. Cl.: B65G 47/51

(54) **LAGER**
STORAGE ASSEMBLY
DISPOSITIF DE STOCKAGE

(30) Priorität: 31.10.2007 AT 17702007
(43) Veröffentlichungstag der Anmeldung: 11.08.2010
(73) Patentinhaber: Springer Maschinenfabrik AG, 9360 Friesach (AT)
(72) Erfinder: EBNER, Franz, A-9833 Rangersdorf (AT); FERCHER, Michael, A-9833 Rangersdorf (AT)
(74) Vertreter: Gibler & Poth Patentanwälte OG
(86) Internationale Anmeldenummer: PCT/AT2008/000392
(87) Internationale Veröffentlichungsnummer: WO 2009/055835

(56) Entgegenhaltungen:
- WO-A-99/37564
- CH-A5- 664 710
- DE-A1- 2 054 831
- FR-A- 2 223 945
- GB-A- 797 370
- GB-A- 2 172 867
- JP-A- 2002 104 650
- US-A- 5 088 533

## Beschreibung

Die Erfindung betrifft ein Verfahren zum Lagern von länglichem Stückgut gemäß dem Oberbegriff des Patentanspruches 1.

Lager für längliches Stückgut aus Holz, insbesondere Holzbretter, Holzbalken, Holzleisten und/oder Holzlatten, sind bekannt. Dabei werden mehrere längliche Stückgüter zu einem Stückgutpaket geschlichtet, wobei im Stückgutpaket längliche Stückgüter übereinander und nebeneinander angeordnet sind.

Die US 5 088 533 A offenbart ein Lager mit mehreren Lagerebenen, gemäß dem Oberbegriff des Anspruchs 10.

Die JP 2002 104 650 A offenbart einen Paternosterquerförderer umfassend eine Mehrzahl von Auflageelementen und einen Ausschieber zum Ausschieben der Stückgüter aus dem Paternosterquerforderer.

Die DE 20 54 831 A beschreibt einen Speicherquerförderer mit einem am Ende des Speicherquerförderers ausgebildeten Hebelarm.

Die GB 2 172 867 A behandelt ein Lager mit mehreren Lagerebenen zur Förderung von Paletten.

Die FR 2 223 945 A zeigt ein Lager zur Lagerung von Baguettes.

Die CH 664 710 A zeigt als ersten Hebequerförderer einen Paternosterförderer, welcher die Bretter zu unterschiedlichen übereinander angeordneten Ebenen des Speicherlagers fördert. Die WO 99/037 564 A beschreibt übereinander angeordnete Förderbänder, welche jeweils an beiden Enden höhenverstellbar sind.

Holz, welches ein gewachsener Werkstoff ist, neigt bis zu einem vorbestimmten Grad zur Eigenverwindung, wobei die Eigenverwindung eines länglichen Stückgutes zur Eigenverwindung anderer länglicher Stückgüter unterschiedlich sein kann.

Nachteilig bei diesem Lager ist, dass durch die zueinander unterschiedliche Eigenverwindung der Stückgüter eine hohe Belastung auf ein einzelnes der länglichen Stückgüter entstehen kann, und/oder dass die Ordnung, insbesondere die vertikal und/oder senkrecht parallele Anordnung der Stückgüter schwer und/oder kaum möglich ist. Dadurch sind der Aufwand und/oder die Gefahr einer Beschädigung bei der Förderung ins Lager, beim Lagern und/oder bei der Entnahme aus dem Lager des länglichen Stückgutes hoch.

Ebenso ist dabei nachteilig, dass der Platzbedarf des Lagers hoch sein kann und dass die Reihenfolge der Entnahme der länglichen Stückgüter nicht oder lediglich mit erheblichem Aufwand geändert werden kann.

Nachteilig dabei kann ebenso sein, dass bei diesen Lagern eine nachträgliche Erweiterung kaum möglich ist, wobei das Lager mit einer vorbestimmten Lagergröße und/oder Lagerkapazität geplant und erbaut werden muss. Dies erschwert die Anpassung des Lagers an sich ändernden Bedarf und/oder ändernde Produktionsplanung.

Aufgabe der Erfindung ist es ein Verfahren zum Lagern von länglichem Stückgut anzugeben, mit welchem die eingangs genannten Nachteile vermieden werden können, mit welchem mit welchem das Einlagern und das Entnehmen des länglichen Stückgutes einfach, schnell, flexibel und mit geringer Gefahr der Beschädigung des länglichen Stückgutes erfolgen kann und mit welchem einfach auf einen geänderten Lagerbedarf und/oder eine geäderte Produktionsplanung reagiert werden kann.

Erfindungsgemäß wird dies durch die Merkmale des Patentanspruches 1 erreicht.

Mit diesem Verfahren können die oben genannten Vorteile und vorteilhaften Wirkungen einfach und kostengünstig erzielt werden, wobei das Lager mittels des Verfahrens insbesondere zumindest teilautomatisch, insbesondere vollautomatisch, betrieben werden kann.

Die Erfindung betrifft auch ein Lager für längliches Stückgut gemäß dem Oberbegriff des Patentanspruches 10.

Aufgabe der Erfindung ist es daher ein Lager anzugeben, mit welchem die genannten Nachteile vermieden werden können, mit welchem das Einlagern und das Entnehmen des länglichen Stückgutes einfach, schnell, flexibel und mit geringer Belastung sowie mit geringer Gefahr der Beschädigung des länglichen Stückgutes erfolgen kann und welches einfach an einen geänderten Lagerbedarf und/oder eine geäderte Produktionsplanung angepasst werden kann.

Erfindungsgemäß wird dies durch die Merkmale des Patentanspruches 10 erreicht.

Dadurch ergibt sich der Vorteil, dass das längliche Stückgut mit dem Hebequerförderer einfach und flexibel zu einer vorbestimmten der mehreren Lagerebenen gefördert werden kann. Vorteilhaft dabei ist, dass unterschiedliche Lagerebenen mit länglichen Stückgütern befüllt und dass die länglichen Stückgüter zur Entnahme aus den unterschiedlichen Lagerebenen bereit stehen können, wobei die Flexibilität des Lagers hoch sein kann. In vorteilhafter Weise können dadurch auch unterschiedliche Geometrien von länglichen Stückgütern einfach im selben Lager eingelagert und/oder zwischengelagert werden. Ebenfalls können dem Lager sehr einfach Lagerebenen hinzugefügt oder entfernt werden. Dadurch kann das Lager sehr einfach in der Lagerkapazität angepasst werden, wobei sich der flächige Platzbedarf des Lagers und/oder die Logistikwege nicht ändern und benachbarte Maschinen und/oder Vorrichtungen nicht verrückt werden müssen.

Vorteilhaft dabei ist, dass die Anzahl der Lagerebenen und/oder der Abstand zwischen den Lagerebenen beliebig wählbar ist. Dadurch ergibt sich der Vorteil, dass das Lager eine hohe Lagerkapazität und einen hohen Raumausnützungsgrad aufweisen kann. Dadurch ergibt sich der Vorteil, dass das längliche Stückgut beim Fördern ins Lager, beim Fördern im Lager und beim Fördern aus dem Lager im Quertransport gefördert werden kann. Vorteilhaft dabei ist, dass dadurch die Gefahr von Beschädigungen des länglichen Stückgutes gering sein kann. Vorteilhaft bei dem Lager ist ebenso, dass Logistikwege des länglichen Stückgutes optimiert werden können und dass die Logistikwege auch bei veränderlicher Größe des Lagers identisch bleiben können. Ebenfalls ist dabei vorteilhaft, dass die Logistikwege automatisiert werden können. Dadurch ergibt sich der Vorteil, dass das Lager automatisiert werden kann. Dadurch ergibt sich der Vorteil, dass sich das Lager insbesondere als Prozesspuffer und/oder als Zwischenlager eignet, wobei die Lagerebenen auch als Etagen und das Lager auch als Etagenlager bezeichnet werden kann.

Die Unteransprüche, welche ebenso wie die Patentansprüche 1 und 10 gleichzeitig einen Teil der Beschreibung bilden, betreffen weitere vorteilhafte Ausgestaltungen der Erfindung.

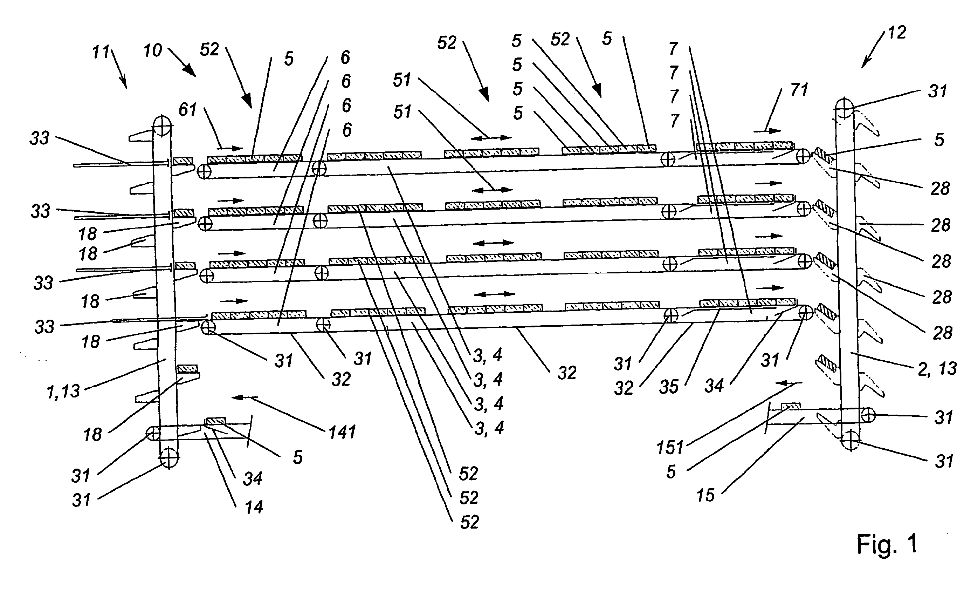

Die Erfindung wird unter Bezugnahme auf die beigeschlossene Zeichnung, die Fig. 1, in welcher lediglich eine bevorzugte Ausführungsform beispielhaft dargestellt ist, näher beschrieben.

Die Fig. 1 zeigt in einer schematischen Ansicht von vorne ein Lager 10 für längliches Stückgut 5, insbesondere aus Holz, bei welchem vorgesehen ist, dass ein erster Hebequerförderer 1 an einer ersten Seite 11 des Lagers 10 und ein zweiter Hebequerförderer 2 an der zweiten Seite 12 des Lagers 10 angeordnet sind und zwischen dem ersten Hebequerforderer 1 und dem zweiten Hebequerförderer 2 zumindest zwei Lagerebenen 3 angeordnet sind, wobei jede der Lagerebenen 3 zumindest einen Speicherquerförderer 4 umfasst, wobei der Speicherquerförderer 4 zum Transport des länglichen Stückgutes 5 zwischen dem ersten Hebequerförderer 1 und dem zweiten Hebequerförderer 2 vorgesehen ist.

Mit dem in Fig. 1 dargestellten Lager 10 kann in vorteilhafter Weise ein Verfahren zum Lagern von länglichem Stückgut 5, insbesondere aus Holz, ausgeführt werden, bei welchem vorgesehen ist, dass das längliche Stückgut 5 in den ersten Hebequerförderer 1 an der ersten Seite 11 des Lagers 10 gefordert wird, dass der erste Hebequerförderer 1 das längliche Stückgut 5 vorbestimmt bis zu einer von den zumindest zwei Lagerebenen 3 anhebt, und dass das längliche Stückgut 5 bei der vorbestimmten Lagerebene 3 aus dem ersten Hebequerförderer 1 heraus in Richtung des zweiten Hebequerförderers 2 an der zweiten Seite 12 des Lagers 10 auf den Speicherquerförderer 4 gefördert wird.

Insbesondere kann Dabei vorgesehen sein, dass das längliche Stückgut 5 vom Speicherquerförderer 4 in Richtung des zweiten Hebequerförderers 2 in den zweiten Hebequerförderer 2 und aus dem zweiten Hebequerförderer 2 herausgefördert wird.

Das Lager 10 und das Verfahren ermöglichen die eingangs genannten Vorteile und vorteilhaften Wirkungen.

Vorteilhaft dabei ist ebenfalls, dass das längliche Stückgut zumindest teilautomatisch, insbesondere vollautomatisch, ins Lager 10, im Lager 10 und aus dem Lager 10 gefördert werden kann.

[weiter auf Seite 4 der ursprünglichen Beschreibung]

Vorteilhaft dabei ist weiters, dass das längliche Stückgut 5 zumindest bereichsweise, insbesondere bei der Zuförderung zum Lager 10, bei der Förderung im Lager 10 sowie bei der Abförderung aus dem Lager 10, im Quertransport, also mit einer Förderrichtung im Wesentlichen normal zur Längserstreckung des länglichen Stückgutes 5, gefördert werden kann. Dadurch kann die Belastung des länglichen Stückgutes 5 beim Fördern, insbesondere beim gesamten Förderprozess, gering sein.

Dadurch dass die länglichen Stückgüter 5 in mehreren Lagerebenen 3 eingelagert werden können, können vorteilhafterweise mehrere Arten, insbesondere Arten unterschiedlicher Abmessungen oder unterschiedliche Holzsorten, auf die mehreren Lagerebenen 3 aufgeteilt werden, wobei jede Lagerebene 3 artengleich befüllt werden kann. Dadurch kann das Lager 10 flexibel befüllt werden.

Dadurch dass die länglichen Stückgüter 5 aus den mehreren Lagerebenen 3 entnommen werden können, ergibt sich der Vorteil, dass die Produktion flexibel angepasst werden kann, dass beliebige Förderabfolgen unterschiedlicher Geometrien länglicher Stückgüter 5 zusammengestellt werden können und dass die länglichen Stückgüter 5 in einer vorgebbaren Ordnung, beispielsweise in einer artengleicher Sortierung, dem Lager 10 entnommen werden können. Diese vorgebbare Ordnung kann einfach und schnell verändert werden. Dadurch kann schnell auf Einflüsse auf die Produktionsplanung reagiert werden, wobei die Auftragsdurchlaufzeit und insbesondere die Reaktionszeit von einer Produktionsplanänderung bis Abarbeitung der Produktionsplanänderung verringert werden kann.

Dadurch können ebenfalls vorbestimmte Geometriefolgen mehrerer länglicher Stückgüter 5 zusammengestellt werden, wobei die länglichen Stückgüter 5 in vorbestimmter geordneter Reihenfolge ihrer Geometrie zu einem nachfolgenden Bearbeitungsschritt gefördert werden. Dadurch kann eine weitere Sortierung vor oder beim dem Lager 10 nachfolgenden Bearbeitungsschritt unterlassen werden, wodurch auch dem Lager 10 nachfolgende Prozessschritte beschleunigt werden können.

Dadurch eignet sich das Lager 10 insbesondere als Prozesspuffer, als Zwischenlager, als Verarbeitungsschrittlager und/oder als Verarbeitungsschrittzwischenlager, wobei das Lager 10 - da das längliche Stückgut 5 auf mehreren Lagerebenen 3 gelagert werden kann - auch als Etagenlager bezeichnet werden kann.

Die Fig. 1 zeigt das Lager 10 der ersten bevorzugten Ausführungsform, wobei das Lager 10 vier Lagerebenen 3 umfasst und wobei jede der Lagerebenen 3 zumindest einen Speicherquerförderer 4 umfasst und/oder wobei jede der Lagerebenen 3 durch zumindest einen Speicherquerförderer 4 ausgebildet ist.

Die Lagerebenen 3 können vorteilhafterweise als Lagerebenenmodul ausgebildet sein, wobei dem Lager 10 eine Lagerebene 3 besonders einfach hinzugefügt oder abgenommen werden kann. Dabei kann das Lager 10 - abhängig von der benötigten Flexibilität, der Anzahl gleichzeitig geförderter unterschiedlicher Geometrien länglicher Stückgüter 5, der benötigten Pufferzeit und/oder der benötigten Lagerkapazität - anstatt mit 4 Lagerebenen 3 auch mit zwei, drei, fünf, sechs, sieben, acht und/oder mehr Lagerebenen 3 ausgebildet sein.

Das längliche Stückgut 5 ist bevorzugt im Wesentlichen aus Holz, insbesondere als Holzbrett, Holzbalken, Holzleiste oder Holzlatte, ausgebildet. Ebenso können mehrere Holzbretter, Holzbalken, Holzleisten und/oder Holzlatten zu einem länglichen Stückgut 5 verbunden, insbesondere verleimt und/oder verschraubt, sein. Das längliche Stückgut 5 kann weiters auch aus einem Holzverbundwerkstoff ausgebildet sein.

Das längliche Stückgut 5 wird mittels einer Zuführeinrichtung 14, insbesondere im Quertransport, zum ersten Hebequerförderer 1 in Antransportrichtung 141 antransportiert. Derart kann der Antransport einfach und mit geringer Belastung für das längliche Stückgut 5 erfolgen.

Die Zuführeinrichtung 14 kann vorteilhafterweise eine Sperreinrichtung 34, insbesondere einen Schranken und/oder einen Balken, umfassen, welche das längliche Stückgut 5 in vorbestimmbaren Abstand zum ersten Hebequerförderer 1 in Förderrichtung, hierbei insbesondere in Antransportrichtung 141, sperren kann. Dadurch kann gewährleistet sein, dass jeweils lediglich ein längliches Stückgut 5 in den Eingriffsbereich eines erstes Auflageelementes 18 des ersten Hebequerförderers 1 und/oder dass das längliche Stückgut 5 zum richtigen Zeitpunkt zum ersten Auflageelement 18 gefördert wird.

Sobald das längliche Stückgut 5 beim ersten Hebequerförderer 1 angefördert ist, kann das erste Auflageelement 18 das längliche Stückgut 5 erfassen und anheben. Vorteilhafterweise umfasst der erste Hebequerförderer 1 eine Mehrzahl der ersten Auflageelemente 18, welche insbesondere in regelmäßigem Abstand zueinander ausgebildet sein können, wobei also die Abstände zwischen jeweils zwei der ersten Auflageelemente 18 konstant und im Wesentlichen gleich ausgebildet sind, wie dies in Fig. 1 dargestellt ist. Dadurch kann der gleichmäßige Durchsatz sowie die gleichmäßige Fördergeschwindigkeit des ersten Hebequerförderers 1 gewährleistet sein. Vorteilhafterweise kann der erste Hebequerförderer 1 als Paternosterquerförderer 13 ausgebildet sein und dabei vorgesehen sein, dass das längliche Stückgut 5 in den als Paternosterquerförderer 13 ausgebildeten ersten Hebequerförderer 1 gefördert wird. Dadurch kann die Hebeförderung des länglichen Stückgutes 5 einfach, stückgutschonend, platzsparend und/oder automatisiert erfolgen, wobei mehrere längliche Stückgüter 5 zeitgleich angehoben werden können.

Der erste Hebequerförderer 1 umfasst zumindest ein Auswurfelement, welche das längliche Stückgut 5 bei einer vorbestimmten der mehreren Lagerebenen 3 aus dem Hebequerförderer 1 ausfördert, ausstoßt und/oder auswirft. Gemäß der in der Fig. 1 dargestellten ersten bevorzugten Ausführungsform des Lagers 10 sind mehrere - vorzugsweise als Ausschieber 33 ausgebildete - Auswurfelemente vorgesehen, wobei jeder der Lagerebenen 3 genau ein Auswurfelement, insbesondere jeweils ein Ausschieber 33, zugehörig ist. Sobald das längliche Stückgut 5 auf die Höhe der vorbestimmten Lagerebene 3 angehoben ist, kann das der Lagerebenen 3 zugehörige Auswurfelement das längliche Stückgut 5 aus dem ersten Hebequerförderer 1 in Richtung des Speicherquerförderers 4 und des zweiten Hebequerförderers 2 stoßen und/oder schieben, insbesondere aus dem Hebequerförderer 1 herausschieben.

In vorteilhafter Weiterbildung kann - wie in der Fig. 1 dargestellt ist - vorgesehen sein, dass zwischen dem Speicherquerförderer 4 und dem ersten Hebequerförderer 1 ein Lagenbildnerquerförderer 6 angeordnet ist, wobei vorgesehen ist, dass das längliche Stückgut 5 nach dem Herausfördern aus dem ersten Hebequerförderer 1 und vor dem Fördern auf Speicherquerförderer 4 auf einen Lagenbildnerquerförderer 6 gefördert wird. Dieser Lagenbildnerquerförderer 6 bildet eine Lage einer vorbestimmbaren Anzahl mehrerer länglicher Stückgüter 5 derart, dass die mehreren länglichen Stückgüter 5 benachbart angrenzend zueinander anliegen und wobei eine Stückgutlage 52 gebildet ist. Durch die Vorbestimmbarkeit der Anzahl der länglichen Stückgüter 5 pro Stückgutlage 52 können die Kräfte beim Lagebilden vorbestimmt gering gehalten werden, womit die Gefahr von Beschädigungen und/oder die Gefahr des unkontrollierten Übereinanderschiebens der länglichen Stückgüter 5 gering sein kann. Insbesondere kann dabei die Stückgutlage 52 einfach und zuverlässig auch bei stark verwundenen länglichen Stückgütern 5 und bei länglichen Stückgütern 5 mit stark variierender Verwindung ausgebildet werden.

Nachdem die vollständige Stückgutlage 52 gebildet ist, kann diese im Quertransport und in eine in Richtung des zweiten Hebequerförderers 1 gerichtete Lagenbildnerförderrichtung 61 zum Speicherquerförderer 4 gefördert werden, wobei zwei benachbarte Stückgutlagen 52 beabstandet zueinander im Lager 10 positioniert sind. Vorteilhaft dabei ist, dass Beschädigungen der länglichen Stückgüter 5 vermieden werden können.

Der Speicherquerförderer 4 dient zum Speichern, zum Puffern, zum Lagern und/oder zum Zwischenlagern sowie zum Querfördern des länglichen Stückgutes 5 vom ersten Hebequerförderer 1 zum zweiten Hebequerförderer 2, wobei der Speicherquerförderer 4 eine Mehrzahl von Stückgutlagen 52 und eine Vielzahl länglicher Stückgüter 5 lagern und fördern kann.

Das vom Speicherquerförderer 4 zum zweiten Hebequerförderer 2 geförderte längliche Stückgut 5 kann von einem vom zweiten Hebequerförderer 2 umfassten zweiten Auflageelement 28 aufgenommen und abgesenkt werden. Vorteilhafterweise umfasst der zweite Hebequerförderer 2 eine Mehrzahl zweiter Auflageelemente 28, welche in regelmäßigem Abstand zueinander ausgebildet sind, wobei die Abstände zwischen jeweils zwei der zweiten Auflageelemente 28 konstant und zueinander im Wesentlichen gleich ausgebildet sind, wie dies in Fig. 1 dargestellt ist. Dadurch kann der gleichmäßige Durchsatz und die gleichmäßige Fördergeschwindigkeit des zweiten Hebequerförderers 1 gewährleistet sein.

Die zweite Auflageelement 28 kann bevorzugt als Taschen ausgebildet sein, wobei das längliche Stückgut 5 beim Fördern zum zweiten Hebequerförderer 2 in das zweite Auflageelement 28 "hineinrutschen" kann. Dies ermöglicht die einfache und zuverlässige Förderung des länglichen Stückgutes 5 im zweiten Hebequerförderer 2.

Insbesondere kann vorgesehen sein, dass der erste Hebequerförderer 1 eine Mehrzahl erster Auflageelemente 18 und der zweite Hebequerförderer 2 eine Mehrzahl zweiter Auflageelemente 28 umfassen.

Vorteilhafterweise kann der zweite Hebequerförderer 2 als Paternosterquerförderer 13 ausgebildet sein und dabei vorgesehen sein, dass das längliche Stückgut in den als Paternosterquerförderer 13 ausgebildeten zweiten Hebequerförderer 2 hineingefördert wird. Dadurch kann die Senkförderung des länglichen Stückgutes 5 einfach, schonend, platzsparend und/oder automatisiert erfolgen, wobei mehrere längliche Stückgüter 5 zeitgleich abgesenkt werden können.

Beim Absenken wird das längliche Stückgut 5 in Richtung einer Ausgabeeinrichtung 15 gefördert. Sobald das längliche Stückgut 5 mit der Ausgabeeinrichtung 15 in Kontakt tritt, kann das längliche Stückgut 5 mittels der Ausgabeeinrichtung 15 aus dem Lager 10 ausgegeben und in Richtung einer Ausgaberichtung 151 gefördert einem weiteren Bearbeitungsschritt zugeführt werden.

Bei sämtlichen Förderschritten ist gemäß der in der Fig. 1 dargestellten bevorzugten ersten Ausführungsform des Lagers 10 vorgesehen, dass das längliche Stückgut in Querförderung gefördert wird. In diesem Zusammenhang kann das Lager 10 auch als Querförderlager bezeichnet werden, da sämtliche Förderungen des länglichen Stückgutes 5 im Lager 10 im Wesentlichen im Quertransport erfolgen können. Vorteilhaft dabei ist, dass die Querförderung eine lediglich geringe Kraftbelastung und eine lediglich geringe Gefahr der Beschädigung des länglichen Stückgutes 5 gewährleisten kann und dass die Querförderung, insbesondere beim Anheben und beim Absenken, des länglichen Stückgutes 5 einen lediglich geringen Platzbedarf aufweisen und insbesondere wendevorgangsfrei erfolgen kann. Dadurch können die Logistikwege und/oder die Förderwege des länglichen Stückgutes 5 optimiert werden und/oder mit geringem Aufwand, insbesondere automatisiert, erfolgen.

In vorteilhafter Weiterbildung kann vorgesehen sein, dass zwischen dem Speicherquerförderer 4 und dem zweiten Hebequerförderer 2 ein Vereinzelungsquerförderer 7 zur Aufnahme mehrerer der Stückgüter 5 und einzelner Abgabe an den zweiten Hebequerförderer 2 angeordnet ist, wobei vorgesehen ist, dass das längliche Stückgut 5 nach dem Fördern von dem Speicherquerförderer 4 und vor dem Fördern in den zweiten Hebequerförderer 2 auf einen Vereinzelungsquerförderer 7 gefördert wird. Dadurch kann die vereinzelte Übergabe eines der länglichen Stückgüter 5 von der Lagerebene 3 auf den zweiten Hebequerförderer 2 gewährleistet sein.

In diesem Zusammenhang kann bevorzugt vorgesehen sein, dass der Vereinzelungsquerförderer 7 zumindest eine Sperreinrichtung 34, insbesondere einen Schranken und/oder einen Balken, umfasst, welche das längliche Stückgut 5 in vorbestimmbaren Abstand zum ersten Hebequerförderer 1 in Förderrichtung, hierbei insbesondere in Vereinzelungsquerfördererrichtung 71, sperren kann. Dabei kann mittels des Vereinzelungsquerförderers 7 geförderte längliche Stückgut 7 mittels der Sperreinrichtung 34 in Richtung der Vereinzelungsquerförderrichtung 71 gesperrt werden. Dadurch kann die geordnete und die zuverlässige Förderung vom Vereinzelungsquerförderer 7 zum zweiten Hebequerförderer 2 erfolgen.

In diesem Zusammenhang kann weiters vorgesehen sein, dass der Vereinzelungsquerförderer 7 eine Aufhebeeinrichtung 35 zum Aufheben des Stückgutes 5 von dem Vereinzelungsquerförderer 7 umfasst. Dadurch kann das längliche Stückgut 5 von einem Förderelement 32 des Vereinzelungsquerförderers 7 aufgehoben werden, wobei das Förderelement 32 ohne Kontakt zum länglichen Stückgut 5 kontinuierlich weiterbewegt werden kann. Dabei kann das mittels des Vereinzelungsquerförderers 7 geförderte längliche Stückgut 7 mittels der Aufhebeeinrichtung 35 von dem Förderelement 32 des Vereinzelungsquerförderer 7 abgehoben werden. Vorteilhaft dabei ist, dass Schleifspuren und/oder Beschädigungen am länglichen Stückgut 5 verhindert werden können. Vorteilhafterweise kann vorgesehen sein, dass der Speicherquerförderer 4, der Vereinzelungsquerförderer 7 und der Lagenbildnerquerförderer 6 zumindest zwei umlaufende Förderelemente 32, insbesondere Förderketten, Förderbänder, umfassen. Dadurch kann die Querförderung des länglichen Stückgutes 5 im gesamten Bereich des Lagers 10 einfach und flexibel erfolgen, wobei eine gute und zuverlässige Auflage des länglichen Stückgutes 5 an den jeweiligen Förderelementen 32 gewährleistet sein kann.

Insbesondere können die Förderelemente 32 des Lagenbildnerquerförderers 6, des Vereinzelungsquerförderers 7 und/oder des Speicherquerförderers 4 im Wesentlichen parallel angeordnet sein, womit die Auflage des länglichen Stückgutes 5 besonders zuverlässig erfolgen kann.

Bevorzugt kann vom Speicherquerförderer 4 eine komplette Stückgutlagen 52 an den Vereinzelungsquerförderers 7 übergeben werden, wobei der Vereinzelungsquerförderers 7 - insbesondere mittels der Sperreinrichtung 34 - die Vereinzelung der Stückgüter 5 der komplette Stückgutlagen 52 übernimmt. Bevorzugt kann der Speicherquerförderer 4 das längliche Stückgut 5 dabei sowohl in Richtung des zweiten Hebequerförderers 2 als auch in Richtung des ersten Hebequerförderers 1 fördern, wobei die Förderung des länglichen Stückgutes 5 im Bereich des Speicherquerförderers 4 in Vor-Rück-Richtung 51 ausgebildet sein kann und/oder bei unterschiedlichen Fördergeschwindigkeiten, also bei variabler Fördergeschwindigkeit, ausgebildet sein kann. Dadurch kann eine erste Stückgutlage 52 an den Vereinzelungsquerförderer 7 und eine der ersten Stückgutlage 52 nachfolgende zweite Stückgutlage 52 in Richtung dem ersten Hebequerförderers 1 rückgefördert wird und anschließend eine weitere dritte Stückgutlage 52 ohne übermäßigem Abstand, insbesondere mit einem vorbestimmten Normalabstand zwischen zwei Stückgutlagen 52, auf den Speicherquerförderer 4 gefördert wird.

Alternativ kann vorgesehen sein, dass aus der Stückgutlage 52 ein oder mehrere längliche Stückgüter 5 entnommen werden und anschließend die verbleibende Stückgutlage 52 in Richtung des ersten Hebequerförderers 1 rückgefördert wird und der verbleibenden Stückgutlage 52 weitere längliche Stückgüter 5 hinzugefügt werden.

Dadurch kann die hohe Flexibilität des Lagers 10 gewährleistet werden, wobei gewährleistet sein kann, dass keine großen Zwischenräume und keine großen Lagerleerräume zwischen zwei Stückgutlagen 52 entstehen. Dies ermöglicht gleichzeitig die hohe Auslastung, die hohe Flexibilität und/oder die schnelle Reaktionsfähigkeit des Lagers 10, insbesondere auch bei kurzfristigen Produktionsplanänderungen.

In vorteilhafter Weiterbildung des Speicherquerförderer 4 kann vorgesehen sein, dass der Speicherquerförderer 4 mehrere Speicherbändereinheiten umfasst, wobei die Speicherbändereinheiten in Förderrichtung des länglichen Stückgutes 5 im Wesentlichen hintereinanderfolgend angeordnet sind. Dadurch kann der Speicherquerförderer 4 mit variabler Länge ausgebildet sein, wobei die Länge des Speicherquerförderers 4, welche parallel zur Förderrichtung des länglichen Stückgutes 5 gemessen wird, einfach und flexibel geändert werden kann und wobei die Speicherbändereinheiten insbesondere modular ausgebildet sein können womit der Speicherquerförderers 4 modular und kostengünstig ausgebildet sein kann.

In diesem Zusammenhang kann vorteilhafterweise vorgesehen sein, dass die Fördergeschwindigkeit und/oder die Förderrichtung des Speicherquerförderers 4, des Lagenbildnerquerförderers 6 und des Vereinzelungsquerförderers 7 unabhängig voneinander gesteuert wird. Dadurch kann eine besonders hohe Flexibilität des Lagers 10 gewährleistet sein.

Vorteilhafterweise kann vorgesehen sein, dass im Bereich des Lagenbildnerquerförderers 6 und im Bereich des Vereinzelungsquerförderers 7 die Förderrichtung lediglich in Richtung des zweiten Hebequerförderers 2 ausgebildet ist. Dadurch können der Lagenbildnerquerförderer 6 und der Vereinzelungsquerförderer 7 mit einem lediglich in eine Richtung antreibenden Antrieb angetrieben werden, wodurch der Antrieb einfach und kostengünstig ausgebildet sein kann. Ebenso kann dadurch ein gemeinsamer Antrieb für den Lagenbildnerquerförderer 6 und den Vereinzelungsquerförderer 7 vorgesehen ist, womit der Antrieb des Lagers 10 besonders einfach und kostengünstig ausgebildet sein kann.

Bei einer - nicht dargestellten - bevorzugten weiteren Ausführungsform des Lagers 1 kann der erste Hebequerförderer 1 und/oder der zweite Hebequerförderer 2 geneigt um einen vorbestimmten Winkel zur Senkrechten, insbesondere zwischen 10° und 50°, bevorzugt zwischen 20° und 40°, ausgebildet sein, wobei das längliche Stückgut 5 geneigt zur Senkrechten angehoben bzw. geneigt zur Senkrechten abgesenkt wird. Dadurch kann eine Lagerlänge, also die Länge zwischen dem ersten Hebeförderer 1 und dem zweiten Hebeförderer 2 mit der Höhe der Lagerebene 3 ansteigen und die Lagerkapazität des Lagers 10 erhöht werden.

Bei einer - nicht dargestellten - vorteilhaften weiteren Ausführungsform des Lagers 1 kann das Lager 1 als Tiefenlager ausgebildet sein, wobei die Lagerebenen anstatt in die Höhe in die Tiefe, also anstatt - in Gebrauchslage des Lagers 10 gesehen - nach oben nach unten, angeordnet sind und wobei der erste Hebequerförderer 1 das längliche Stückgut 5 absenkt sowie der zweite Hebequerförderer 2 das längliche Stückgut 5 anhebt.

Bevorzugt kann - wie bei der ersten bevorzugten Ausführungsform vorgesehen - der erste Hebequerförderer 1 und/oder der zweite Hebequerförderer 2 zumindest zwei umlaufende Förderelemente 32, insbesondere Förderketten, Förderbänder, umfassen. Dadurch kann der erste Hebequerförderer 1 und/oder der zweite Hebequerförderer 2 einfach und insbesondere in der Höhenerstreckung flexibel ausgebildet sein.

Die umlaufenden Förderelemente 32 können insbesondere durch Rollen 31 abgestützt werden, wodurch die Lagerung und der Antrieb der Förderelemente 32 besonders einfach, kostengünstig und zuverlässig erfolgen kann.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zum Lagern von länglichem Stückgut (5), insbesondere aus Holz, wobei das längliche Stückgut (5) in einen ersten Hebequerförderer (1) an einer ersten Seite (11) eines Lagers (10) gefördert wird, wobei der erste Hebequerförderer (1) das längliche Stückgut (5) vorbestimmt bis zu einer von zumindest zwei Lagerebenen (3) anhebt, und wobei das längliche Stückgut (5) bei der vorbestimmten Lagerebene (3) aus dem ersten Hebequerförderer (1) heraus in Richtung eines zweiten Hebequerförderers (2) an einer zweiten Seite (12) des Lagers (10) auf einen Speicherquerförderer (4) gefördert wird, **dadurch gekennzeichnet, dass** das längliche Stückgut (5) mittels des Speicherquerförderers (4) in Richtung des zweiten Hebequerförderers (2) und in Richtung des ersten Hebequerförderes (1) gefördert wird.

2. Verfahren nach Anspruch 1, **dadurch gekennzeichnet, dass** das längliche Stückgut (5) in einen als Paternosterquerförderer (13) ausgebildeten ersten Hebequerförderer (1) gefördert wird.

3. Verfahren nach Anspruch 1 oder 2, **dadurch gekennzeichnet, dass** das längliche Stückgut (5) vom Speicherquerförderer (4) in Richtung eines zweiten Hebequerförderers (2) gefördert wird, in den zweiten Hebequerförderers (2) gefördert wird und aus dem zweiten Hebequerförderer (2) heraus gefördert wird.

4. Verfahren nach Anspruch 1, 2 oder 3, **dadurch gekennzeichnet, dass** das längliche Stückgut in den als Paternosterquerförderer (13) ausgebildeten zweiten Hebequerförderer (2) gefördert wird.

5. Verfahren nach einem der Ansprüche 1 bis 4, **dadurch gekennzeichnet, dass** das längliche Stückgut (5) nach dem Herausfördern aus dem ersten Hebequerförderer (1) und vor dem Fördern auf den Speicherquerförderer (4) auf einen Lagenbildnerquerförderer (6) gefördert wird.

6. Verfahren nach einem der Ansprüche 1 bis 5, **dadurch gekennzeichnet, dass** das längliche Stückgut (5) nach dem Fördern von dem Speicherquerförderer (4) und vor dem Fördern in den zweiten Hebequerförderer (2) auf einen Vereinzelungsquerförderer (7) gefördert wird.

7. Verfahren nach Anspruch 6, **dadurch gekennzeichnet, dass** das mittels des Vereinzelungsquerförderers (7) geförderte längliche Stückgut (5) mittels einer Sperreinrichtung (34) in Richtung einer Vereinzelungsquerförderrichtung (71) gesperrt wird.

8. Verfahren nach Anspruch 6 oder 7, **dadurch gekennzeichnet, dass** das mittels des Vereinzelungsquerförderers (7) geförderte längliche Stückgut (5) mittels einer Aufhebeeinrichtung (35) von einem Förderelement (32) des Vereinzelungsquerförderers (7) abgehoben wird.

9. Verfahren nach einem der Ansprüche 1 bis 8, **dadurch gekennzeichnet, dass** das längliche Stückgut (5) mittels des Speicherquerförderers (4) bei unterschiedlichen Fördergeschwindigkeiten gefördert wird.

10. Lager (10) für längliches Stückgut (5), insbesondere aus Holz, wobei ein erster Hebequerförderer (1) an einer ersten Seite (11) des Lagers (10) und ein zweiter Hebequerförderer (2) an der zweiten Seite (12) des Lagers (10) angeordnet sind und zwischen dem ersten Hebequerförderer (1) und dem zweiten Hebequerförderer (2) zumindest zwei Lagerebenen (3) angeordnet sind, wobei jede der Lagerebenen (3) zumindest einen Speicherquerförderer (4) umfasst, und wobei der Speicherquerförderer (4) zum Transport des länglichen Stückgutes (5) zwischen dem ersten Hebequerförderer (1) und dem zweiten Hebequerfördeter (2) vorgesehen ist, **dadurch gekennzeichnet, dass** der Speicherquerförderer (4) zur Förderung des länglichen Stückgutes (5) sowohl in Richtung des zweiten Hebequerförderers (2) als auch in Richtung des ersten Hebequerförderers (1) ausgebildet ist.

11. Lager nach Anspruch 10, **dadurch gekennzeichnet, dass** der erste Hebequerförderer (1) und/oder der zweite Hebequerförderer (2) als Paternosterquerförderer (13) ausgebildet ist.

12. Lager nach Anspruch 10 oder 11, **dadurch gekennzeichnet, dass** der erste Hebequerförderer (1) eine Mehrzahl erster Auflageelemente (18) und/oder der zweite Hebequerförderer (2) eine Mehrzahl zweiter Auflageelemente (28) umfassen.

13. Lager nach Anspruch 12, **dadurch gekennzeichnet, dass** die ersten Auflageelemente (18) in regelmäßigem Abstand zueinander ausgebildet sind und/oder die zweiten Auflageelemente (28) in regelmäßigem Abstand zueinander ausgebildet sind.

14. Lager nach einem der Ansprüche 10 bis 13, **dadurch gekennzeichnet, dass** der erste Hebequerförderer (1) zum Auswerfen des länglichen Stückgutes (5) aus dem ersten Hebequerförderer (1) zumindest ein, vorzugsweise als Ausschieber (33) ausgebildetes, Auswurfelement umfasst.

15. Lager nach einem der Ansprüche 10 bis 14, **dadurch gekennzeichnet, dass** zwischen dem Speicherquerförderer (4) und dem zweiten Hebequerförderer (2) ein Vereinzelungsquerförderer (7) zur Aufnahme mehrerer der Stückgüter (5) und einzelner Abgabe an den zweiten Hebequerförderer (2) angeordnet ist.

16. Lager nach Anspruch 15, **dadurch gekennzeichnet, dass** der Vereinzelungsquerförderer (7) zum Sperren des länglichen Stückgutes (5) in einer Vereinzelungsquerförderrichtung (71) zumindest eine Sperreinrichtung (34) umfasst.

17. Lager nach Anspruch 15 oder 16, **dadurch gekennzeichnet, dass** der Vereinzelungsquerförderer (7) zum Aufheben des länglichen Stückgutes (5) eine Aufhebeeinrichtung (35) umfasst.

18. Lager nach einem der Ansprüche 10 bis 17, **dadurch gekennzeichnet, dass** zwischen dem Speicherquerförderer (4) und dem ersten Hebequerförderer (1) ein Lagenbildnerquerförderer (6) zur Ausbildung einer Lage einer vorbestimmbaren Anzahl mehrerer länglicher Stückgüter (5) angeordnet ist

19. Lager nach Anspruch 18, **dadurch gekennzeichnet, dass** der Speicherquerförderer (4), der Vereinzelungsquerförderer (7) und der Lagenbildnerquerförderer (6) zumindest zwei umlaufende Förderelemente (32), insbesondere Förderketten, Förderbänder, umfassen.

20. Lager nach Anspruch 18 oder 19, **dadurch gekennzeichnet, dass** die Förderrichtung des länglichen Stückgutes (5) im Bereich des Lagenbildnerquerförderers (6) und im Bereich des Vereinzelungsquerförderers (7) lediglich in Richtung des zweiten Hebequerförderers ausgebildet ist.

21. Lager nach einem der Ansprüche 10 bis 20, **dadurch gekennzeichnet, dass** der Speicherquerförderer (4) mehrere Speicherbändereinheiten umfasst, wobei die Speicherbändereinheiten in Förderrichtung des länglichen Stückgutes (5) im Wesentlichen hintereinanderfolgend angeordnet sind.

## Claims

1. A method for storing elongated piece goods (5), especially made of wood, with the elongated piece good (5) being conveyed in a first elevating cross conveyor (1) on one first side (11) of a storage assembly (10), with the first elevating cross conveyor (1) lifting the elongated piece good (5) in a predetermined manner up to one of at least two storage levels (3), and with the elongated piece good (5) being conveyed at the predetermined storage level (3) out of the first elevating cross conveyor (1) in the direction of a second elevating cross conveyor (2) on a second side (12) of the storage assembly (10) onto a storage cross conveyor (4), **characterized in that** the elongated piece good (5) is conveyed by means of the storage cross conveyor (4) in the direction of the second elevating cross conveyor (2) and in the direction of the first elevating cross conveyor (1).

2. A method according to claim 1, **characterized in that** the elongated piece good (5) is conveyed into a first elevating cross conveyor (1) arranged as a paternoster cross conveyor (13).

3. A method according to claim 1 or 2, **characterized in that** the elongated piece good (5) is conveyed from the storage cross conveyor (4) in the direction of a second elevating cross conveyor (2), and conveyed into the second elevating cross conveyor (2), and conveyed out of the second elevating cross conveyor (2).

4. A method according to claim 1, 2 or 3, **characterized in that** the elongated piece good is conveyed into the second elevating cross conveyor (2) arranged as a paternoster cross conveyor (13).

5. A method according to one of the claims 1 to 4, **characterized in that** the elongated piece good (5) is conveyed onto a layer-forming cross conveyor (6) after being conveyed out of the first elevating cross conveyor (1) and before being conveyed onto the storage cross conveyor (4).

6. A method according to one of the claims 1 to 5, **characterized in that** the elongated piece good (5) is conveyed onto a separation cross conveyor (7) after the conveyance from the storage cross conveyor (4) and before the conveyance into the second elevating cross conveyor (2).

7. A method according to claim 6, **characterized in that** the elongated piece good (5) which is conveyed by means of the separation cross conveyor (7) is blocked in the direction (71) of separation cross conveyance by means of a blocking device (34).

8. A method according to claim 6 or 7, **characterized in that** the elongated piece good (5) which is conveyed by means of the separation cross conveyor (7) is lifted by means of a lifting device (35) from a conveying element (32) of the separation cross conveyor (7).

9. A method according to one of the claims 1 to 8, **characterized in that** the elongated piece good (5) is conveyed by means of the storage cross conveyor (4) at different conveying speeds.

10. A storage assembly (10) for elongated piece goods (5), especially made of wood, with a first elevating cross conveyor (1) being arranged on a first side (11) of the storage assembly (10) and a second elevating cross conveyor (2) on the second side (12) of the storage assembly (10), and at least two storage levels (3) are arranged between the first elevating cross conveyor (1) and the second elevating cross conveyor (2), with each of the storage levels (3) comprising at least one storage cross conveyor (4), and with the storage cross conveyor (4) being provided for conveying the elongated piece good (5) between the first elevating cross conveyor (1) and the second elevating cross conveyor (2), **characterized in that** the storage cross conveyor (4) is arranged for conveying the elongated piece good (5) both in the direction of the second elevating cross conveyor (2) and in the direction of the first elevating cross conveyor (1).

11. A storage assembly according to claim 10, **characterized in that** the first elevating cross conveyor (1) and/or the second elevating cross conveyor (2) are arranged as a paternoster cross conveyors (13).

12. A storage assembly according to claim 10 or 11, **characterized in that** the first elevating cross conveyor (1) comprises a plurality of first support elements (18) and/or the second elevating cross conveyor (2) comprises a plurality of second support elements (28).

13. A storage assembly according to claim 12, **characterized in that** the first support elements (18) are arranged at a regular distance from one another and/or the second support elements (28) are arranged at a regular distance from one another.

14. A storage assembly according to one of the claims 10 to 13, **characterized in that** the first elevating cross conveyor (1) comprises at least one ejector element, preferably arranged as a push-out member (33), for ejecting the elongated piece good (5) from the first elevating cross conveyor (1).

15. A storage assembly according to one of the claims 10 to 14, **characterized in that** a separation cross conveyor (7) for receiving several of the piece goods (5) and for the individual delivery to the second elevating cross conveyor (2) is arranged between the storage cross conveyor (4) and the second elevating cross conveyor (2).

16. A storage assembly according to claim 15, **characterized in that** the separation cross conveyor (7) comprises at least one blocking device (34) for blocking the elongated piece good (5) in a direction (71) of separation cross conveyance.

17. A storage assembly according to claim 15 or 16, **characterized in that** the separation cross conveyor (7) comprises a lifting device (35) for lifting the elongated piece good (5).

18. A storage assembly according to one of the claims 10 to 17, **characterized in that** a layer-forming cross conveyor (6) is arranged between the storage cross conveyor (4) and the first elevating cross conveyor (1) for forming a layer of a predeterminable number of several elongated piece goods (5).

19. A storage assembly according to claim 18, **characterized in that** the storage cross conveyor (4), the separation cross conveyor (7) and the layer-forming cross conveyor (6) comprise at least two revolving conveying elements (32), especially conveyor chains or conveyor belts.

20. A storage assembly according to claim 18 or 19, **characterized in that** the conveying direction of the elongated piece good (5) in the region of the layer-forming cross conveyor (6) and in the region of the separation cross conveyor (7) is merely arranged in the direction of the second elevating cross conveyor (2).

21. A storage assembly according to one of the claims 10 to 20, **characterized in that** the storage cross conveyor (4) comprises several storage belt units, with the storage belt units being arranged in a substantially successive manner in the conveying direction of the elongated piece good (5).

## Revendications

1. Procédé pour le stockage d'articles allongés (5), en particulier en bois, dans lequel l'article allongé (5) est transporté dans un premier convoyeur transversal élévateur (1) sur un premier côté (11) d'un dépôt (10), dans lequel le premier convoyeur transversal élévateur (1) lève l'article allongé (5) de façon prédéterminée jusqu'à l'un d'au moins deux niveaux de stockage (3), et dans lequel l'article allongé (5) est transporté sur un convoyeur transversal d'entreposage (4), au niveau de stockage (3) prédéterminé, hors du premier convoyeur transversal élévateur (1) en direction d'un deuxième convoyeur transversal élévateur (2) sur un deuxième côté (12) du dépôt (10), **caractérisé en ce que** l'article allongé (5) est transporté au moyen du convoyeur transversal d'entreposage (4) en direction du deuxième convoyeur transversal élévateur (2) et en direction du premier convoyeur transversal élévateur (1).

2. Procédé selon la revendication 1, **caractérisé en ce que** l'article allongé (5) est transporté dans un premier convoyeur transversal élévateur (1) conçu comme un convoyeur transversal à marche continue (13).

3. Procédé selon la revendication 1 ou 2, **caractérisé en ce que** l'article allongé (5) est transporté à partir du convoyeur transversal d'entreposage (4) en direction d'un deuxième convoyeur transversal élévateur (2), transporté dans le deuxième convoyeur transversal élévateur (2) et transporté hors du deuxième convoyeur transversal élévateur (2).

4. Procédé selon la revendication 1, 2 ou 3, **caractérisé en ce que** l'article allongé est transporté dans un deuxième convoyeur transversal élévateur (2) conçu comme un convoyeur transversal à marche continue (13).

5. Procédé selon l'une des revendications 1 à 4, **caractérisé en ce que** l'article allongé (5), après avoir été transporté hors du premier convoyeur transversal élévateur (1) et avant d'être transporté sur le convoyeur transversal d'entreposage (4), est transporté sur un convoyeur transversal de formation de couches (6).

6. Procédé selon l'une des revendications 1 à 5, **caractérisé en ce que** l'article allongé (5), après avoir été transporté par le convoyeur transversal d'entreposage (4) et avant d'être transporté dans le deuxième convoyeur transversal élévateur (2), est transporté sur un convoyeur transversal séparateur (7).

7. Procédé selon la revendication 6, **caractérisé en ce que** l'article allongé (5) transporté au moyen du convoyeur transversal séparateur (7) est bloqué au moyen d'un dispositif de blocage (34) dans une direction de transport transversal séparateur (71).

8. Procédé selon la revendication 6 ou 7, **caractérisé en ce que** l'article allongé (5) transporté au moyen du convoyeur transversal séparateur (7) est soulevé au moyen d'un dispositif élévateur (35) d'un élément de transport (32) du convoyeur transversal séparateur (7).

9. Procédé selon l'une des revendications 1 à 8, **caractérisé en ce que** l'article allongé (5) est transporté au moyen du convoyeur transversal d'entreposage (4) à différentes vitesses de transport.

10. Dépôt (10) pour des articles allongés (5), en particulier en bois, dans lequel un premier convoyeur transversal élévateur (1) est disposé sur un premier côté (11) du dépôt (10) et un deuxième convoyeur transversal élévateur (2) sur le deuxième côté (12) du dépôt (10) et il est prévu entre le premier convoyeur transversal élévateur (1) et le deuxième convoyeur transversal élévateur (2) au moins deux niveaux de stockage (3), chacun des niveaux de stockage (3) comprenant au moins un convoyeur transversal d'entreposage (4), et le convoyeur transversal d'entreposage (4) étant prévu pour le transport de l'article allongé (5) entre le premier convoyeur transversal élévateur (1) et le deuxième convoyeur transversal élévateur (2), **caractérisé en ce que** le convoyeur transversal d'entreposage (4) est conçu pour transporter l'article allongé (5) aussi bien en direction du deuxième convoyeur transversal élévateur (2) qu'en direction du premier convoyeur transversal élévateur (1).

11. Dépôt selon la revendication 10, **caractérisé en ce que** le premier convoyeur transversal élévateur (1) et/ou le deuxième convoyeur transversal élévateur (2) sont conformés comme des convoyeurs transversaux à marche continue (13).

12. Dépôt selon la revendication 10 ou 11, **caractérisé en ce que** le premier convoyeur transversal élévateur (1) comprend une pluralité de premiers éléments d'appui (18) et/ou le deuxième convoyeur transversal élévateur (2) une pluralité de deuxièmes éléments d'appui (28).

13. Dépôt selon la revendication 12, **caractérisé en ce que** les premiers éléments d'appui (18) sont formés à intervalles réguliers les uns par rapport aux autres et/ou les deuxièmes éléments d'appui (28) sont formés à intervalles réguliers les uns par rapport aux autres.

14. Dépôt selon l'une des revendications 10 à 13, **caractérisé en ce que** le premier convoyeur transversal élévateur (1) comprend pour l'éjection de l'article allongé (5) hors du premier convoyeur transversal élévateur (1) au moins un élément éjecteur, de préférence conçu comme une coulisse d'éjection (33).

15. Dépôt selon l'une des revendications 10 à 14, **caractérisé en ce qu'**il est prévu entre le convoyeur transversal d'entreposage (4) et le deuxième convoyeur transversal élévateur (2) un convoyeur transversal séparateur (7) destiné à recevoir plusieurs des articles allongés (5) et à les déposer séparément sur le deuxième convoyeur transversal élévateur (2).

16. Dépôt selon la revendication 15, **caractérisé en ce que** le convoyeur transversal séparateur (7) comprend, pour le blocage de l'article allongé (5) dans un direction de transport transversal séparateur (71), au moins un dispositif de blocage (34).

17. Dépôt selon la revendication 15 ou 16, **caractérisé en ce que** le convoyeur transversal séparateur (7) comprend un dispositif élévateur (35) pour lever l'article allongé (5).

18. Dépôt selon l'une des revendications 10 à 17, **caractérisé en ce qu'**il est prévu entre le convoyeur transversal d'entreposage (4) et le premier convoyeur transversal élévateur (1) un convoyeur transversal de formation de couches (6) pour former une couche d'un nombre pouvant être prédéterminé de plusieurs articles allongés (5).

19. Dépôt selon la revendication 18, **caractérisé en ce que** le convoyeur transversal d'entreposage (4), le convoyeur transversal séparateur (7) et le convoyeur transversal de formation de couches (6) comprennent au moins deux éléments de transport (32) circulants, en particulier des chaînes de transport ou des bandes de transport.

20. Dépôt selon la revendication 18 ou 19, **caractérisé en ce que** le sens de transport de l'article allongé (5) au niveau du convoyeur transversal de formation de couches (6) et au niveau du convoyeur transversal séparateur (7) est formé seulement en direction du deuxième convoyeur transversal élévateur.

21. Dépôt selon l'une des revendications 10 à 20, **caractérisé en ce que** le convoyeur transversal d'entreposage (4) comprend plusieurs unités de bandes d'entreposage, les unités de bandes d'entreposage étant disposées sensiblement les unes à la suite des autres dans la direction de transport de l'article allongé (5).
